# EUROPEAN PATENT SPECIFICATION

(11) **EP 0 464 379 B1**
(45) Date of publication and mention of the grant of the patent: **01.03.1995**
(21) Application number: 91109056.1
(22) Date of filing: 03.06.1991
(51) Int. Cl.: F16J 15/32, F16C 33/78

(54) **A sealing device, particularly for a rolling bearing**
Dichtung, insbesondere für ein Walzlager
Joint d'étanchéité, en particulier pour palier à roulement

(30) Priority: 08.06.1990 IT 6741790
(43) Date of publication of application: 08.01.1992
(73) Proprietor: SKF INDUSTRIE S.P.A., I-10123 Torino (IT)
(72) Inventor: Vignotto, Angelo, I-10134 Torino (IT)
(74) Representative: Cerbaro, Elena

(56) References cited:
- EP-A- 0 208 880
- GB-A- 2 213 210

## Description

The present invention relates to an improved double-screen sealing device in which a V-shaped elastomeric element is interposed between two rigid screens, generally of sheet metal, the elastomeric item including in sequence, two annular deformable lips which together exert sealing actions both in the axial and in the radial senses on the screens.

It is known that rolling bearings used for heavy-duty purposes, such as, for example, those mounted on the wheel hubs of road vehicles, are provided with sealing devices/assemblies inserted between the rings in order to isolate the space in which the rolling bodies roll from the exterior both to prevent lubricating grease from escaping and, more particularly, to prevent the infiltration of contaminants such as water, dust, mud, moisture which could cause rapid wear of the bearing itself. The sealing assemblies currently used are composed of two rigid screens, one of which has an elastomeric sealing element projecting from there, a pair of annular sealing lips of the element being in sliding contact, a first with a flange portion of the other screen and a second with a sleeve portion of the latter, so that the first lip exerts a sealing action in an axial sense while the second lip, simultaneously, exerts a sealing action in a radial sense.

Seal assemblies of this type give fairly satisfactory results but are not free from problems; in particular, when the two lips are formed independently of each other, so as to project in different directions from a common root portion, the moulding of the elastomeric element is complicated because of the presence of undercuts in the mould and the axial sealing is satisfactory only if the screens are assembled extremely precisely between the bearing rings. On the contrary, in the more common case in which the elastomeric sealing element is V-shaped in radial section so that the lips are arranged in sequence to form the two sides of the V-shaped with the axial lip projecting from the sealing edge of the radial lip, the moulding of the elastomeric element is easier but the axial sealing achieved by the lip depends strictly on the operative conditions and the work of the radial sealing lip, whereby there is a risk of simultaneous loss of sealing on both lips or, at least, of making the axial sealing lip work under very poor conditions; this latter problem may be overcome, at least in part, as e.g. shown in GB-A-2213210, by suitable conformation of the lips together with the use of an elastic element, preferably located in a non-aligned position with respect to the position of the sealing edge of the radial lip, so that the contact pressure of the two lips is regulated separately. However this latter solution results in a certain structural complexity and cost, the elastic element having to be pre-assembled on the sealing element.

The object of the invention is to provide a sealing device of the double-screen type which is free from the disadvantages described above, that is, which is structurally simple and cheap to manufacture and, at the same time, ensures good axial sealing and, particularly, makes the axial sealing substantially independent of the radial sealing.

This object is achieved by the invention which relates to a sealing device as claimed in Claim 1.

In order to provide a better understanding of the invention, a non-limiting description is now given of one embodiment, with reference to the appended drawing, in which:
Figure 1 is a partial, sectioned, elevational view of a rolling bearing which is generally known but which is provided with a sealing device according to the invention of which a detail is also illustrated on an enlarged scale; and
Figure 2 illustrates a possible variant of the sealing device of the invention.

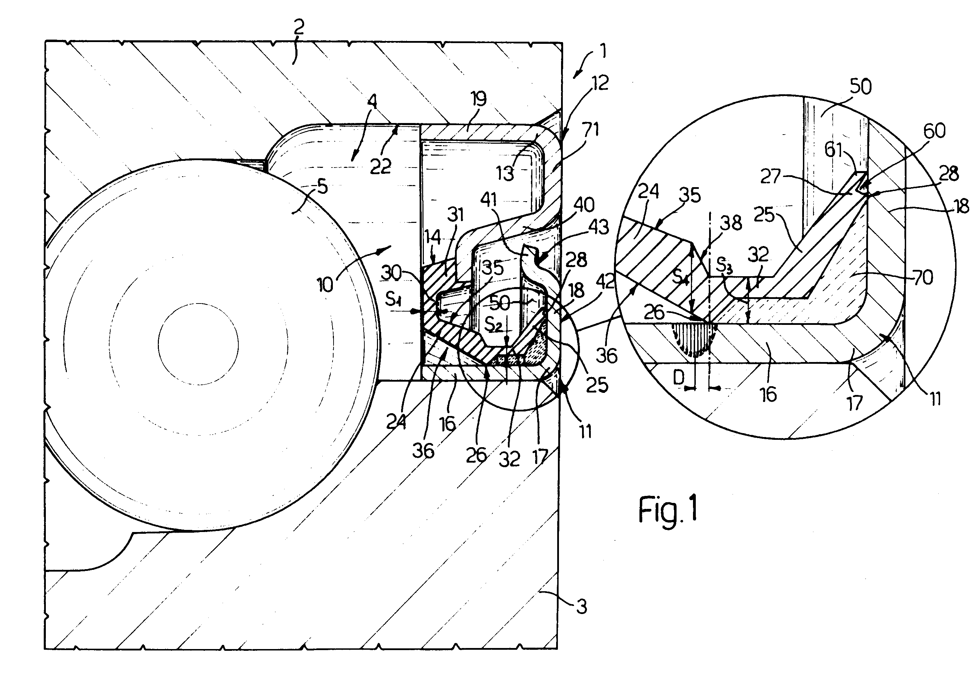

With reference to Figure 1, a rolling bearing generally indicated 1 includes an outer ring 2, an inner ring 3 mounted co-axially within the ring 2 so as to define an annular chamber 4 therewith, and a plurality of rolling bodies 5, for example balls, housed in the chamber 4 and interposed between the rings 2 and 3 so as to render them relatively rotatable with low friction; for protection and fluid sealing of the chamber 4 which, as well as the balls 5, is preferably filled with a lubricating grease in use, a sealing device 10 is interposed between the rings 2 and;
3. The sealing device includes a first annular screen 11 which is substantially rigid and preferably formed in a unitary piece from sheet metal, and a second annular screen 12 coaxial with, and facing, the screen 11 and comprising a substantially rigid, annular metal reinforcement 13 which, in radial section, is preferably in the form of a reversed C-shape so that, in use, its concavity faces the rolling bodies 5 so as to enable the chamber 4 to house a greater quantity of lubricating grease and an elastomeric, annular sealing element 14 fixed to, and projecting from, the reinforcement 13, it being anchored thereto, for example, during vulcanising.

The screen 11 includes a sleeve portion 16 by means of which the screen 11 can be fitted to the inner ring 3 so as to be co-axial and rigid for rotational therewith and a flange portion 18 which projects radially from one end 17 of the sleeve 16 opposite the screen 12; this can be fitted in use to the outer ring 2 by means of the reinforcement 13 which includes an anchoring sleeve portion 19, like the sleeve 16 and adapted to co-operate in known manner with a seat 22 in the bearing 1 to anchor the screen 12 to the outer ring 2 for rotation therewith and, simultaneously, to form a fluid-tight seal between the seat 22 and the exterior.

The seal between the two annular screens 11 and 12, which are mounted facing and coaxial with each other, is ensured by the element 14 which has an essentially a V-shape in radial section and includes a first annular lip 24 which co-operates slidingly with the sleeve portion 16 to form a fluid seal and a second annular lip 25 which cooperates slidingly with the flange portion 18 to form a fluid seal; more particularly, the lip 24 has a sealing edge 26 which interferes with the sleeve portion 16 and consequently acts to form a seal in the radial sense while the lip 25 has a free edge portion 27 which terminates in a sealing edge 28 which interferes, in use, with the flange portion 18 and consequently acts to form a seal in the axial sense.

The lip 24 projects obliquely from the reinforcement 13, starting from a first root portion 30 of the elastomeric element 14 which in turn originates in a portion 31 by which it is attached to the reinforcement 13, while the lip 25 projects axially from the first lip 24, parallel to the sleeve portion 16, starting from a second root portion 32 and formed in correspondence with the sealing edge 26 and opposite the end 27. In accordance with the main characteristic of the invention, the root portion 32 of the lip 25 has a thickness S₂ which is less than the thickness S₁ of the root portion 30 of the lip 24; the Applicant has, in fact, been able to show that this device renders the axial sealing action of the lip 25 substantially independent of the radial sealing achieved by the lip 24 in that it enables at least one of the two seals to be maintained effectively even when the other is less so. According to a further characteristic of the invention, moreover, the annular lip 24 is defined by two opposed conical side surfaces 35, 36, the first being radially outermost and the second radially innermost, these being coaxial but having different but concordant conicities such that the lip 24 tapers towards the root portion 30; in combination with this characteristic, the lip 24 is formed with an oblique bevel 38 in correspondence with the sealing edge 26 but on the opposite side from that facing the sleeve portion 16 so that the sealing edge 26 has a thickness S₃ which is less than the thickness S₄ of the lip 24 immediately before the start of the bevel 38. Tests carried out by the Applicant have shown that this further combination of structural characteristics improves the sealing action in that the lip 24 is enabled to couple with interference with the sleeve portion 16 by exerting a pressure thereon which, as a result of the encircling effect due to the resilient deformation of the elastomeric material constituting the element 14, has a distribution diagram such as that shown by way of example in figure 1, that is, with its maximum offset axially by a distance D from the position of the sealing edge 26 in a direction away from the second lip 25.

The annular elastomeric element 14 is shaped such that the root portion 30 is substantially perpendicular to the sleeve portion 16 of the first screen while the root portion 32 is, in turn, substantially perpendicular to the portion 30 and projects from the sealing edge 26 in correspondence with the end of the bevel 38 so as to be spaced from the surface of the sleeve portion 16 by a distance sufficient to enable the lip 25 to pivot relative to the lip 24 and thus ensure that the lip 25 acts in the optimum manner; the attachment portion 31 extends obliquely from the reinforcement 13, on the same side as that faced by the concavity of the latter, and has an inclination substantially opposite that of the lip 24 so that the element 14 is concave towards the flange portion 18 of the screen 11. This characteristic, together with the fact that the lip 25 is inclined to the portion 16 with an inclination opposite that of the lip 24 so that the lips 24,25 form the opposite sides of the V-shape defined in radial section by the element 14, facilitates the expulsion of contaminants should they come into contact with the element 14 by penetrating the annular interspace between the two screens 11, 12. For this purpose, the reinforcement 13, close to the attachment portion 31 of the element 14, has a corresponding radially-inner frusto-conical portion 40 with a conicity concordant with that of the lip 25 while the flange portion 18 has a radially outer peripheral edge 41 which is formed with an annular embossment, which on its extradotal side, extends axially towards the screen 12 and its intradotal side, towards a face 42 of the portion 18 opposite the screen 12 itself defines an annular concave rim or concavity 43.

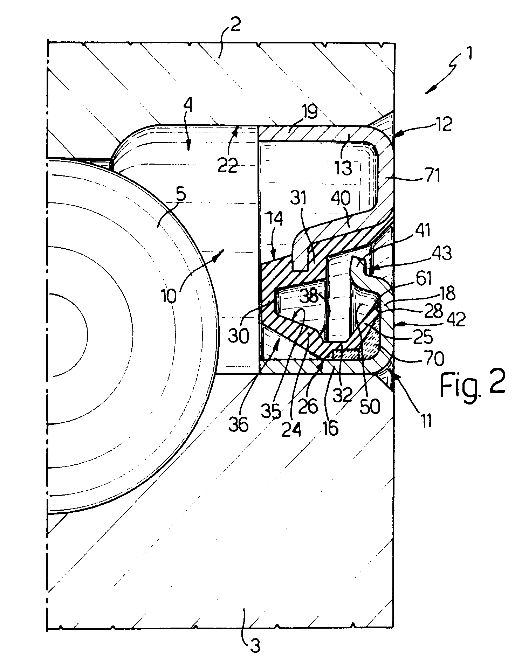

When the screens 11 and 12 are assembled, the portion 40 faces, and is very close to, the convex extradotal surface of the edge 41 so as to form a labyrinthine seal, otherwise of known type, between the screens 11 and 12 so as to protect the sealing element 14; since the screen 11 is that which is mounted on the element which is intended to rotate (the inner ring 3 in the present case) the concavity 43, together with the form of the edge 41, further improves the labyrinthine seal between the screens 11, 12, centrifuging contaminants to the outside, away from the seal itself. In the variant illustrated in figure 2, where details similar to, or the same as, those described above are indicated by the same numerals for simplicity, in order further to improve the labyrinthine seal between the screens 11, 12 and to avoid any damage to the device 10 should there be any interference between the screens 11, 12 in this zone, the attachment portion 31 of the element 14 is formed so as to cover that frusto-conical portion 40 of the reinforcement 13 which faces the embossed edge 41 so that the labyrinthine seal is in fact defined between the embossed edge 41 and the conical portion 40.

The embossed edge 41 also defines a recess 50 facing the screen 12, the base of which is defined by the portion 18 whereby the edge portion 27 of the lip 25 which co-operates with the portion 16 is disposed within the recess 50; this improves the sealing achieved by the lip 25 in that this works within the axial bulk defined by the edge 41 and is thus shielded from external contamination thereby, any contaminants being centrifuged away before they cause wear on the sealing edge 28; according to the preferred embodiment illustrated in both figures 1 and 2, the edge portion 27 is formed with an external, step-shaped annular discharge recess 60 which defines, on the external periphery thereof, the sealing edge 28 and an annular dust proofing lip or appendage 61 which provides further protection for the edge 28 and further improves the axial sealing provided by the device 10; indeed the dust proofing lip 61 and the edge 28 both co-operate simultaneously to provide a sliding fluid-tight seal with the flange portion 18 whereby double axial sealing is achieved simultaneously; when the screens 11, 12 are assembled, a sealed annular chamber 70 is defined between the sealing edges 26, 28 and the screen 11 and is filled with a special lubricant which retards the wear on the sealing edges 26, 28 due to friction and at the same time reduces the friction between the screens 11, 12 and thus makes it possible to use the device 10 with high-performance bearings for which it is necessary to achieve very low frictional losses.

Finally, to facilitate the assembly of the device 10 and ensure the accurate positioning of the screens 11,12, the reinforcement 13 and the flange portion 18 of the screen 11 have respective flat bearing portions which, when the screens are assembled, are coplanar with each other and arranged to allow the sealing device 10 to be force-fitted into the seat 22; these flat portions, in the present case, comprise the face 42 and a portion 71 of the reinforcement 13 which is perpendicular to the portion 19.

From what has been described above, the advantages of the invention will be apparent; in particular, the specific combination of structural characteristics described above enables a sealing device to be made easily and economically and, at the same time, capable of exercising an extremely good sealing action. It also has a long working life and low frictional losses.

## Claims

1. A sealing device (10) for insertion between two members (2,3) rotatable relatively to each other, of the type comprising a first, substantially rigid, annular screen (11) including a sleeve portion (16) adapted to be fixed coaxially to a first of said members (2,3) for rotation therewith and a flange portion (18) projecting radially form the sleeve portion (16) and fixed for rotation therewith, and a second annular screen (12) adapted to be mounted on a second of the members (2,3) coaxially with and facing the first screen (11), the second screen (12) including a substantially rigid annular reinforcement (13) adapted to be fixed for rotation with the second member (2) and an annular, elastomeric sealing element (14), which is substantially V-shaped in radial section and includes a first annular lip (24), which cooperates slidingly with the sleeve portion (16) to form a fluid seal, and a second annular lip (25), which cooperates slidingly with the flange portion (18) to form a fluid seal and projects axially from the first lip (24), parallel to the sleeve portion (16); **characterized** in that:
(i)- the first lip (24) projects obliquely from the reinforcement (13) and originates in a first root portion (30) of the elastomeric element (14);
(ii)- the second lip (25) originates in a respective second root portion (32) formed in correspondence with a sealing edge (26) of the first lip (24); and
(iii)- the second root portion (32) is thinner than the first root portion (30) so as to render the axial sealing action of the second lip (25) independent of the radial sealing action of the first lip (24).

2. A sealing device (10) according to Claim 1, characterized in that the first annular lip (24) is delimited by two opposite side faces (35,36), a radially inner one (36) and a radially outer one (35) respectively, the faces (35,36) being conical and coaxial and having different conicities such that the thickness of the first lip (24) tapers towards the first root portion (30); in combination thereof, the first lip (24) being formed with an inclined bevel (38) provided in correspondence with the sealing edge (26) but on the side of the first lip (24) opposite to that facing the sleeve portion (16), so that the sealing edge (26) is thinner than the first lip (24) immediately before the start of the bevel (38).

3. A sealing device (10) according to Claim 2, wherein the first lip (24) is enabled to couple with interference with the sleeve portion (16) of the first screen (11) and is adapted, due to the encircling effect due to the resilient deformation of the elastomeric element (14), to exert a pressure thereon having a distribution diagram with its maximum offset axially from the position of the sealing edge (26) of the first lip (24) in a direction away from the second lip (25).

4. A sealing device (10) according to Claim 3, wherein the annular reinforcement (13) has, essentially, a reverse C-shape in radial section, the concavity of the reverse C-shaped annular reinforcement (13) being provided on the side of the reinforcement (13) opposite to that facing the flange portion (18) of the first screen (11).

5. A sealing device (10) according to Claim 4, wherein the first root portion (30) is substantially perpendicular to the sleeve portion (16) of the first screen (11) and is connected to the annular reinforcement (13) by an inclined attachment portion (31) of the annular sealing element (14), the inclination of the attachment portion (31) being substantially opposite that of the first lip (24) and extending on the same side as the concavity of the annular reinforcement (13); the second root portion (32), on the other hand, being formed as a projection on the sealing edge (26) of the first lip (24) at the end with the inclined bevel (38) and being disposed substantially perpendicular to the first root portion (30).

6. A sealing device (10) according to any one of the preceding claims, characterised in that the second sealing lip (25) extends obliquely with an inclination opposite that of the first lip (24) so that the lips (24, 25) form the opposite limbs of the V-shape defined by the radial section of the annular sealing element (14); an end (27) of the second lip (25), opposite the sealing edge (26), co-operating slidingly with the flange portion (18) of the first screen (11) substantially within the bulk of a recess (50) defined by an outer peripheral edge (41) of the flange portion (18) formed as an annular embossment (41) which extends axially towards the second screen (12) on its extradotal side and, on its intradotal side, towards a face (42) of the flange portion (18) opposite the second screen (12), defines an annular concave rim (43).

7. A sealing device (10) according to claim 6, characterised in that the end (27) of the second sealing lip (25) includes a second sealing edge (28) provided around the outer periphery with an annular dust-proofing appendage (61); this latter and the second sealing edge (28) both co-operate simultaneously in sliding contact with the flange portion (18) of the first screen (11), to form a fluid-tight seal.

8. A device (10) according to claim 6 or claim 7, characterised in that the embossed edge (41) of the flange portion (18) co-operates with a radially-inner frusto-conical portion (40) of the reinforcement (13) of the second screen (12), the conicity of said portion (40) being concordant with that of the second lip (25) so as to define a labryinthine seal between the screens (11, 12).

9. A sealing device (10) according to claim 8, characterised in that an attachment portion (31) of the annular sealing element (14) extends so as to cover the radially-inner frusto-conical portion (40) of the reinforcement (13) which faces the embossed edge (41) of the flange portion (18) the first screen (11) so that the labyrinthine seal is defined between the embossed edge (41) and the attachment portion (3) of the elastomeric sealing element (14).

10. A sealing device (10) according to any one of the preceeding claims, characterised in that the reinforcement (13) of the second screen (12) and the flange portion (18) of the first screen (11) include respective flat bearing portions (42, 71) which are coplanar with each other when the screens (11, 12) are assembled so as to enable the sealing device (10) to be force fitted into a respective seat (4) therefor.

## Patentansprüche

1. Dichtungseinrichtung (10) zum Einfügen zwischen zwei relativ zueinander drehbaren Teilen (2, 3), bestehend aus einer ersten, im wesentlichen steifen, ringförmigen Abschirmung (11) mit einem Buchsenteil (16), der koaxial an einem ersten der Teile (2, 3) zur Drehung mit diesem befestigbar ist, und einem Flanschteil (18), der radial von dem Buchsenteil (16) hervorragt, sowie einer zweiten ringförmigen Abschirmung (12), die auf dem zweiten der Teile (2, 3) koaxial und gegenüberliegend zur ersten Abschirmung (11) befestigbar ist, wobei die zweite Abschirmung (12) eine im wesentlichen steife, ringförmige Verstärkung (13), die zur Drehung mit dem zweiten Teil (2) an diesem befestigbar ist, und ein ringförmiges, elastomeres Dichtelement (14) besitzt, das im wesentlichen V-förmig im Radialschnitt ist und eine erste, ringförmige Lippe (24), die zum Bilden einer Flüssigheitsdichtung gleitend mit dem Buchsenteil (16) zusammenwirkt, und eine zweite, ringförmige Lippe (25) einschließt, die zum Bilden einer Flüssigkeitsdichtung gleitend mit dem Flanschteil (18) zusammenwirkt und axial von der ersten Lippe (24), parallel zum Buchsenteil (16) wegragt, **dadurch gekennzeichnet,** daß:
(i) die erste Lippe (24) schräg von der Verstärkung (13) hervorragt und von einem ersten Fußteil (30) des elastomeren Elements (14) ausgeht;
(ii) die zweite Lippe (25) von einem zweiten Fußteil (32) ausgeht, der in Verbindung mit einer Dichtkante (26) der ersten Lippe (24) ausgebildet ist;
(iii) der zweite Fußteil (32) dünner als der erste Fußteil (30) ist, um die axiale Dichtwirkung der zweiten Lippe (25) unabhängig von der radialen Dichtwirkung der ersten Lippe (24) zu machen.

2. Dichtungseinrichtung (10) nach Anspruch 1, **dadurch gekennzeichnet,** daß die erste ringförmige Lippe (24) von zwei gegenüberliegenden Seitenflächen (35, 36) begrenzt ist, einer radial inneren Fläche (36) bzw. einer radial äußeren Fläche (35), wobei die Flächen (35, 36) konisch und koaxial sind und verschiedene Konizitäten besitzen, so daß sich die Stärke der ersten Lippe (24) zum ersten Fußteil (30) hin verjüngt, und daß in Kombination damit die erste Lippe (24) mit einer abfallenden Schräge (38) ausgebildet ist, die in Verbindung mit der Dichtkante (26) vorgesehen ist, jedoch auf der gegenüberliegenden der dem Buchsenteil (16) zugewandten Seite der ersten Lippe (24), so daß die Dichtkante (26) dünner als die erste Lippe (24) unmittelbar vor dem Beginn der Schräge (38) ist.

3. Dichtungseinrichtung (10) nach Anspruch 2, **dadurch gekennzeichnet,** daß die erste Lippe (24) in der Lage ist, in gegenseitiger Anlage mit dem Buchsenteil (16) der ersten Abschirmung (11) zusammenzuwirken, und wegen der Umschlingungswirkung und der elastischen Verformung des elastomeren Elements (14) auf den Buchsenteil einen Druck ausüben kann, der ein Verteilungsdiagramm besitzt, dessen Maximum axial von der Position der Dichtkante (26) der ersten Lippe (24) in einer Richtung weg von der zweiten Lippe (25) verschoben ist.

4. Dichtungseinrichtung (10) nach Anspruch 3, **dadurch gekennzeichnet,** daß die ringförmige Verstärkung (13) im radialen Schnitt im wesentlichen eine umgekehrte C-Form besitzt, wobei die Austiefung der umgekehrt C-förmigen, ringförmigen Verstärkung (13) auf derjenigen Seite der Verstärkung (13) vorgesehen ist, die gegenüber der dem Flanschteil (18) der ersten Abschirmung (11) zugewandten Seite liegt.

5. Dichtungseinrichtung (10) nach Anspruch 4, **dadurch gekennzeichnet,** daß der erste Fußteil (30) im wesentlichen senkrecht zum Buchsenteil (16) der ersten Abschirmung (11) steht und mit der ringförmigen Verstärkung (13) über einen abgeschrägten Befestigungsteil (31) des ringförmigen Dichtungselements (14) verbunden ist, wobei die Abschrägung des Befestigungsteils (31) jener der ersten Lippe (24) im wesentlichen entgegengesetzt ist und sich auf der gleichen Seite wie die Austiefung der ringförmigen Verstärkung (13) erstreckt, und auf der anderen Seite der zweite Fußteil (32) als ein Fortsatz an der Dichtkante (26) der ersten Lippe (24) an dem Ende mit der abfallenden Schräge (38) angeformt und im wesentlichen senkrecht zu dem ersten Fußteil (30) angeordnet ist.

6. Dichtungseinrichtung (10) nach einem der vorhergehenden Ansprüche, **dadurch gekennzeichnet,** daß sich die zweite Dichtlippe (25) schräg mit einer jener der ersten Lippe (24) entgegengesetzten Neigung erstreckt, so daß die Lippen (24, 25) die gegenüberliegenden Schenkel der im Radialschnitt des ringförmigen Dichtelements bestimmten V-Form bilden und ein der Dichtkante (26) entgegengesetztes Ende (27) der zweiten Lippe (25) gleitend mit dem Flanschteil (18) der ersten Abschirmung (11) im wesentlichen innerhalb des Umfangs einer Ausnehmung (50) zusammenwirkt, die durch einen äußeren Umfangsrand (41) des Flanschteils (18) begrenzt ist, die als eine ringförmige Umbördelung (41) ausgebildet ist, welche sich an ihrer ausgewölbten Seite in Richting der zweiten Abschirmung (12) und auf ihrer eingewölbten Seite in Richtung einer Stirnfläche (42) des Flanschteils (18), entgegengesetzt der zweiten Abschirmung (12), axial erstreckt und einen ringförmigen, konkaven Rand (43) bildet.

7. Dichtungseinrichtung (10) nach Anspruch 6, **dadurch gekennzeichnet,** daß das Ende (27) der zweiten Dichtlippe (25) eine zweite Dichtkante (28) besitzt, die um den mit einem ringförmigen, staubdichten Ansatzstück (61) versehenen äußeren Umfang herum vorgesehen ist, wobei sowohl das Ansatzstück als auch die zweite Dichtkante (28) gleichzeitig in Gleitkontakt mit dem Flanschteil (18) der ersten Abschirmung (11) zusammenwirken, um eine wasserfeste Dichtung zu bilden.

8. Dichtungseinrichtung (10) nach Anspruch 6 oder 7, **dadurch gekennzeichnet,** daß die umgebördelte Kante (41) des Flanschteils (18) mit einem radial inneren, stumpfkegeligen Teil (40) der Verstärkung (13) der zweiten Abschirmung (12) zusammenwirkt, wobei die Konizität dieses Teils (40) mit jener der zweiten Lippe (25) übereinstimmt, um eine Labyrinthdichtung zwischen den Abschirmungen (11, 12) zu bilden.

9. Dichtungseinrichtung (10) nach Anspruch 8, **dadurch gekennzeichnet,** daß ein Befestigungsteil (31) des ringförmigen Dichtelements (14) sich so erstreckt, daß es den radial inneren, stumpfkegeligen Teil (40) der Verstärkung (13) abdeckt, welcher der umgebördelten Kante (41) des Flanschteils (18) der ersten Abschirmung (11) zugewandt ist, so daß die Labyrinthdichtung zwischen der umgebördelten Kante (41) und dem Befestigungsteil (31) des elastomeren Dichtelements (14) gebildet ist.

10. Dichtungseinrichtung (10) nach einem der vorhergehenden Ansprüche, **dadurch gekennzeichnet,** daß die Verstärkung (13) der zweiten Abschirmung (12) und der Flanschteil (18) der ersten Abschirmung (11) jeweils flache Tragtelle (42, 71) besitzen, die beide in der gleichen Fläche liegen, wenn die Abschirmungen (11, 12) so zusammengebaut sind, daß die Dichtungseinrichtung (10) in einen jeweiligen Sitz (4) dafür einpressbar ist.

## Revendications

1. Dispositif d'étanchéité (10) destiné à être inséré entre deux éléments (2,3) pouvant tourner l'un par rapport à l'autre, du type comprenant un premier écran annulaire (11), sensiblement rigide, comprenant une partie manchon (16) adaptée pour être fixée coaxialement à un premier desdits éléments (2,3) en vue d'une rotation avec ce dernier et une partie rebord (18) faisant saillie radialement depuis la partie manchon (16) et fixée en vue d'une rotation avec ce dernier, et un second écran annulaire (12) adapté pour être monté sur un second des éléments (2,3) coaxialement au premier écran (11) et en regard de ce dernier, le second écran (12) comprenant un renforcement annulaire (13) sensiblement rigide, adapté pour être fixé en vue d'une rotation avec le second élément (2), et un élément d'étanchéité annulaire (14) en élastomère, qui a sensiblement la forme d'un V en coupe radiale et qui comprend une première lèvre (24), laquelle coopère, de façon glissante, avec la partie manchon (16) de manière à former un joint d'étanchéité aux fluides, et une seconde lèvre annulaire (25), laquelle coopère de façon glissante avec la partie rebord (18) de manière à former un joint d'étanchéité aux fluides et fait saillie axialement depuis la première lèvre (24), parallèlement à la partie manchon (16), caractérisé en ce que :
(i) la première lèvre (24) fait saillie obliquement depuis le renforcement (13) et prend naissance dans une première partie base (30) de l'élément (14) en matière élastomère;
(ii) la seconde lèvre (25) prend naissance dans une seconde partie base correspondante (32) formée en correspondance avec un bord d'étanchéité (26) de la première lèvre (24); et
(iii) la seconde partie base (32) est plus mince que la première partie base (30) de manière à rendre l'action d'étanchéité axiale de la seconde lèvre (25) indépendante de l'action d'étanchéité radiale de la première lèvre (24).

2. Dispositif d'étanchéité (10) selon la revendication 1, caractérisé en ce que la première lèvre annulaire (24) est délimitée par deux faces latérales opposées (35,36), une face radialement intérieure (36) et une face radialement extérieure (35) respectivement, les faces (35,36) étant coniques et coaxiales et ayant des conicités différentes de sorte que l'épaisseur de la première lèvre (24) diminue en direction de la première partie base (30); la première lèvre (24) comportant une partie inclinée ou chanfrein (38) formé en correspondance avec le bord d'étanchéité (26) mais sur le côté de la première lèvre (24) qui est à l'opposé de celui qui est orienté vers la partie manchon (16), de sorte que le bord d'étanchéité (26) est plus mince que la première lèvre (24) immédiatement avant le début du chanfrein (38).

3. Dispositif d'étanchéité (10) selon la revendication 2, dans lequel la première lèvre (24) peut être couplée, sans jeu, avec la partie manchon (16) du premier écran (11) et être adaptée, par suite de l'effet d'encerclement dû à la déformation élastique de l'élément (14) en matière élastomère, pour exercer sur ce dernier une pression ayant un diagramme de distribution avec son maximum décalé axialement par rapport à la position du bord d'étanchéité (26) de la première lèvre (24) dans une direction qui l'éloigne de la seconde lèvre (25).

4. Dispositif d'étanchéité (10) selon la revendication 3, dans lequel le renforcement annulaire (13) a, en coupe radiale, essentiellement la forme d'un C inversé, la concavité du renforcement annulaire (13) en C inversé se trouvant sur le côté du renforcement (13) situé à l'opposé de celui qui est orienté vers la partie rebord (18) du premier écran (11).

5. Dispositif d'étanchéité (10) selon la revendication 4, dans lequel la première partie base (30) est sensiblement perpendiculaire à la partie manchon (16) du premier écran et est raccordée au renforcement annulaire (13) par une partie de fixation inclinée (31) de l'élément d'étanchéité annulaire (14), l'inclinaison de la partie de fixation (31) étant sensiblement opposée à celle de la première lèvre (24) et s'étendant sur le même côté que la concavité du renforcement annulaire (13), la seconde partie base (32) se présentant, par contre, sous la forme d'une saillie sur le bord d'étanchéité (26) de la première lèvre (24) à l'extrémité munie du chanfrein incliné (38) et étant disposée de façon sensiblement perpendiculaire à la première partie base (30).

6. Dispositif d'étanchéité (10) selon l'une quelconque des revendications précédentes, caractérisé en ce que la seconde lèvre d'étanchéité (25) s'étend obliquement avec une inclinaison opposée à celle de la première lèvre (24), de telle sorte que les lèvres (24,25) forment les branches opposées de la forme en V définie par la section radiale de l'élément d'étanchéité annulaire (14); une extrémité (27) de la seconde lèvre (25), située à l'opposé du bord d'étanchéité (26), coopérant de façon glissante avec la partie rebord (18) du premier écran (11) sensiblement à l'intérieur d'un évidement (50) défini par un bord périphérique extérieur (41) de la partie rebord (18), se présentant sous la forme d'une partie repoussée annulaire (41) qui s'étend axialement en direction du second écran (12) sur son côté extérieur, et son côté intérieur, vers une face (42) de la partie rebord (18) située à l'opposé du second écran (12), définit un bord circulaire concave annulaire (43).

7. Dispositif d'étanchéité (10) selon la revendication 6, caractérisé en ce que l'extrémité (27) de la seconde lèvre d'étanchéité (25) comprend un second bord d'étanchéité (28) pourvu, sur sa périphérie extérieure, d'un appendice annulaire anti-poussière (61), ce dernier et le second bord d'étanchéité (28) coopérant tous deux simultanément en contact glissant avec la partie rebord (18) du premier écran (11) pour former un joint d'étanchéité aux fluides.

8. Dispositif (10) selon la revendication 6 ou la revendication 7, caractérisé en ce que le bord protubérant (41) de la partie rebord (18) coopère avec une partie tronconique radialement intérieure (40) du renforcement (13) du second écran (12), la conicité de ladite partie (40) concordant avec celle de la seconde lèvre (25) de manière à définir un joint d'étanchéité à labyrinthe entre les écrans (11,12).

9. Dispositif d'étanchéité (10) selon la revendication 8, caractérisé en ce qu'une partie de fixation (31) de l'élément d'étanchéité annulaire (14) s'étend de manière à recouvrir la partie tronconique radialement intérieure (40) du renforcement (13) qui est orientée vers le bord repoussé (41) de la partie rebord (18) du premier écran (11), de telle sorte que le joint d'étanchéité à labyrinthe soit défini entre le bord repoussé (41) et la partie de fixation (31) de l'élément d'étanchéité (14) en matière élastomère.

10. Dispositif d'étanchéité (10) selon l'une quelconque des revendications précédentes, caractérisé en ce que le renforcement (13) du second écran (12) et la partie rebord (18) du premier écran (11) comprennent des parties plates respectives (42,71) de roulement qui se trouvent l'une et l'autre dans le même plan quand les écrans (11,12) sont assemblés, de manière que le dispositif d'étanchéité (10) puisse être introduit à force dans un siège correspondant (4) qui lui est destiné.
